(19) Europäisches Patentamt
European Patent Office
Office européen des brevets

(11) **EP 2 384 969 B1**

(12) **FASCICULE DE BREVET EUROPEEN**

(45) Date de publication et mention de la délivrance du brevet:
**11.11.2015 Bulletin 2015/46**

(21) Numéro de dépôt: **11003320.6**

(22) Date de dépôt: **20.04.2011**

(51) Int Cl.:
*B64C 13/10* (2006.01)    *B64C 27/56* (2006.01)
*B64C 27/59* (2006.01)    *G05D 1/08* (2006.01)
*G05G 5/03* (2008.04)    *G05G 5/22* (2006.01)
*G05G 5/08* (2006.01)    *B64C 13/30* (2006.01)

(54) **Système de commandes de vol simplifiées comportant un dispositif de friction débrayable**

Vereinfachtes Flugsteuerungssystem mit ausrückbarer Kupplungsvorrichtung

Simplified flight-control system comprising a disconnectable friction device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2010 FR 1001973**

(43) Date de publication de la demande:
**09.11.2011 Bulletin 2011/45**

(73) Titulaire: **Airbus Helicopters**
**13725 Marignane Cedex (FR)**

(72) Inventeurs:
• **Leguay, Pascal**
**13980 Alleins (FR)**
• **Carlavan, Cédric**
**38080 Saint Alban de Roche (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
WO-A1-03/081554    FR-A1- 2 295 473
GB-A- 487 145    US-A- 5 412 299
US-A1- 2003 094 539

**Description**

La présente invention se rapporte au domaine technique général des systèmes de commande de vol, notamment pour aéronefs et plus généralement pour des appareils appelés avions, giravions ou hélicoptères.

La présente invention concerne plus particulièrement des systèmes de commandes de vol susceptibles de mettre en oeuvre des fonctionnalités d'un pilotage automatique. Ces systèmes de commandes sont destinés au réglage d'organes mobiles d'attitude d'un aéronef du genre avion ou giravion, en fonction de l'actionnement d'organes de commande agissant sur au moins une chaîne de commande de vol.

Le système de commandes de vol selon l'invention, est par exemple destiné à la commande d'un plateau cyclique d'un rotor principal d'hélicoptère. Dans un tel exemple, les organes mobiles sont constitués par des servocommandes hydrauliques, reliés au plateau cyclique du rotor principal. L'actionnement, par exemple par le pilote, d'un manche cyclique agit sur l'inclinaison du plateau cyclique autour de deux axes perpendiculaires. L'inclinaison du plateau cyclique impose alors une inclinaison de l'assiette du rotor principal qui dépend du déplacement angulaire du manche cyclique.

De manière connue, le déplacement du manche cyclique de l'avant vers l'arrière ou inversement provoque un déplacement en tangage de l'aéronef et le déplacement du manche cyclique de la droite vers la gauche ou inversement provoque un déplacement en roulis de l'aéronef. Les déplacements en tangage et en roulis de l'aéronef sont ainsi générés par les basculements correspondants du rotor principal.

Les axes de commande de vol en roulis et en tangage sont de préférence matérialisés par des chaînes de commande mécaniques distinctes, reliant les organes mobiles d'attitude au manche cyclique.

Les chaînes de commande de vol d'hélicoptères peuvent être équipées de vérins de stabilisation, appelés vérins séries, pilotés par un système de pilotage automatique. Ces vérins séries sont installés en série sur les chaînes de commande de vol et déplacent les organes mobiles d'attitude situés en aval des positions desdits vérins séries. Les déplacements des organes mobiles ne doivent pas, en revanche provoquer des déplacements d'autres organes situés sur les chaînes de commande de vol, par exemple les manches cycliques, situés en amont des positions desdits vérins séries.

Un certain nombre de systèmes de pilotage automatique comprennent des vérins parallèles, appelés vérins de trim, installés en parallèle des chaînes de commande de vol au plus près des manches et/ou des pédales, qui corrigent automatiquement les positions des organes mobiles. Ce sont en général ces vérins de trim qui assurent l'ancrage des vérins de stabilisation.

Dans le cas d'un système de pilotage automatique simplifié ne comprenant pas de vérins de trim et consistant en une simple stabilisation sur deux axes, en tangage et en roulis, il est possible d'utiliser un mécanisme de friction sur les deux axes de commande cyclique en remplacement de l'ancrage des vérins de stabilisation.

Le document FR 764 635 décrit par exemple des moyens de friction pour une commande de vol cyclique. Les moyens de friction comprennent deux mécanismes de friction indépendants sur deux axes de commandes distincts. Chaque mécanisme de friction comporte une molette de réglage. La molette de réglage plus ou moins serrée contre une glissière permet de définir l'intensité de friction de chaque mécanisme de friction de manière indépendante. L'utilisation de deux mécanismes de friction augmente le nombre de pièces et la masse embarquée, ce qui est un inconvénient non négligeable pour un aéronef du genre hélicoptère. De plus ces moyens de friction sont généralement réglés une fois pour toute lors de l'assemblage initial ou lors d'une révision et sont ensuite non accessibles du poste de pilotage.

Le document FR 2 678 577 mentionne un exemple de réalisation dans lequel les moyens de friction utilisent une rotule hémisphérique à la base du manche cyclique. La rotule sert au pivotement du manche cyclique et permet de constituer les moyens de friction. La rotule comprend une coupelle de friction fixe solidaire du plancher de l'aéronef, laquelle est traversée par le manche ainsi qu'une coupelle de friction liée au dit manche. Cette dernière s'applique contre la coupelle fixe. Un bouton moleté entourant le manche permet de procéder au réglage du niveau de friction entre les deux coupelles. Le bouton moleté permet de modifier la friction simultanément sur deux axes de commande (roulis et tangage). Malgré ce réglage simplifié, ces moyens de friction présente un certain nombre d'inconvénients. Ces moyens de friction sont mécaniquement complexes et souvent peu fiables ou pas reproductibles avec précision au niveau de leur réglage. Le réglage des moyens de friction est par ailleurs difficilement accessible pour le copilote.

On connaît également, par l'intermédiaire du document FR 2 295 473, qui est considéré comme l'art antérieur le plus proche et décrit les caractéristiques du préambule de la revendication 1, un système de pilotage automatique comprenant des vérins séries à autorité limitée en amplitude. Un système de directeur de vol donne au pilote des informations lui permettant de recentrer les vérins séries lorsqu'ils sont proches de leur extension et rétraction extrêmes. Un organe de friction préréglé est prévu dans un exemple de réalisation, pour maintenir le manche de commande dans la position dans laquelle il a été amené par le pilote.

Dans les cas où les vérins série sont installés relativement proche du manche cyclique, les réalisations connues présentent l'inconvénient majeur que le niveau de friction préréglé et nécessaire pour remplir la fonction d'ancrage desdits vérins, constitue une gêne pour le pilote lorsqu'il doit reprendre les commandes de l'aéronef.

Le but de la présente invention vise par conséquent à fournir un nouveau système de commandes de vol ne présentant pas les inconvénients mentionnés ci-dessus, en ne dégradant pas le confort de manipulation des commandes de vol pour le pilote.

Un autre but de la présente invention vise à fournir un nouveau système de commandes de vol permettant de stabiliser le pilotage à court terme et à long terme, malgré l'absence de vérins de trim.

La présente invention a également pour objet de proposer un nouveau dispositif de friction permettant de s'affranchir des limitations mentionnées ci-dessus.

La présente invention a également pour objet de proposer un nouveau système de pilotage automatique simplifié gérant un système de commandes de vol tout en s'affranchissant des limitations mentionnées ci-dessus.

Les buts et objets assignés à l'invention sont atteints à l'aide d'un dispositif de friction pour maintenir dans une position déterminée un organe de commande manuel,

caractérisé en ce qu'il comporte:

- une pièce de contact mobile entre une position stable débrayée et une position stable embrayée et inversement, ladite position stable embrayée correspondant à une position dans laquelle la pièce de contact est en appui sur l'organe de commande de manière à établir une force de friction déterminée,

- des moyens d'entraînement électromécaniques pour déplacer la pièce de contact entre les deux positions stables,

- et un moyen de commande à distance pour activer et désactiver les moyens d'entraînement.

Selon un exemple de réalisation conforme à l'invention, les moyens d'entraînement comprennent un moteur électrique entraînant en rotation un arbre fileté sur lequel est monté un écrou solidaire de la pièce de contact, ledit écrou étant bloqué en rotation grâce un doigt d'arrêt fixe dont une extrémité est engagée transversalement dans ledit écrou, de manière à imposer un déplacement en translation dudit écrou dans une chemise de guidage sous l'effet de la rotation de l'arbre fileté.

Selon un exemple de réalisation conforme à l'invention, la pièce de contact comporte une garniture femelle de forme hémisphérique destinée à venir en appui sur une garniture mâle de forme hémisphérique complémentaire fixée sur l'organe de commande, pour établir la friction.

Selon un exemple de réalisation, le dispositif conforme à l'invention comprend des moyens de compensation pour rattraper automatiquement l'usure des parties réalisant la friction.

Selon un exemple de réalisation conforme à l'invention, les moyens de compensation comprennent d'une part un support de garniture monté coulissant et bloqué en rotation sur une portion d'extrémité de l'écrou présentant un diamètre plus faible que le diamètre de la portion complémentaire dudit écrou et d'autre part un ressort monté sur la portion d'extrémité de l'écrou entre le support de garniture et un épaulement réalisé par la portion complémentaire, ledit ressort étant comprimé lorsque la friction est établie.

Selon un exemple de réalisation, le dispositif conforme à l'invention comporte des moyens de limitation pour limiter automatiquement la force de friction à un seuil de friction maximal déterminé.

Selon un exemple de réalisation conforme à l'invention, les moyens de limitation comprennent une lumière oblongue ménagée dans l'écrou et dans laquelle est engagée l'extrémité du doigt d'arrêt fixe, limitant ainsi la course en translation de l'écrou à une distance correspondant à la dimension longitudinale de la lumière oblongue et limitant par conséquent la compression du ressort.

Selon un exemple de réalisation, le dispositif conforme à l'invention comporte des moyens de réglage du niveau d'effort de friction.

Selon un exemple de réalisation conforme à l'invention, l'organe de commande est un manche cyclique d'un giravion du genre hélicoptère.

Les objets assignés à l'invention sont également atteints à l'aide d'un système de commandes de vol pour aéronef comportant au moins un organe mobile d'attitude, comprenant :

- au moins un organe de commande manuel agissant sur au moins un axe de commande de l'aéronef,

- et au moins une chaîne mécanique de commande pour chaque axe de commande, chaque chaîne mécanique de commande reliant l'organe de commande à au moins un organe mobile d'attitude de l'aéronef,

caractérisé en ce qu'il comprend un dispositif de friction tel que décrit ci-dessus sur au moins une chaîne mécanique de commande.

Selon un exemple de réalisation conforme à l'invention, l'organe de commandes manuel est un manche cyclique et l'organe mobile d'attitude est un plateau cyclique, les axes de commande comprenant ainsi l'axe de commande en roulis et l'axe de commande en tangage de l'aéronef.

Selon un exemple de réalisation, le système de commandes de vol conforme à l'invention comprend un palonnier en tant qu'organe de commande pour agir sur un rotor anti-couple, les axes de commande comprenant ainsi au moins l'axe de commande en lacet de l'aéronef.

Selon un exemple de réalisation, le système de commandes de vol conforme à l'invention comprend un manche collectif en tant qu'organe de commande pour agir sur le pas collectif d'un rotor principal, les axes de commande comprenant ainsi au moins l'axe de commande du pas collectif.

Selon un exemple de réalisation, le système de commandes de vol conforme à l'invention comprend deux manches cycliques reliés entre eux par un tube de conjugaison de tangage sur lequel ils sont articulés, le dispositif de friction constituant un prolongement d'un côté dudit tube de conjugaison de tangage monté rotatif sur un longeron de la structure de l'aéronef et le centre de la garniture mâle hémisphérique coïncidant avec le point d'intersection de l'axe dudit tube de conjugaison de tangage et de l'axe de rotation en roulis du manche cyclique situé du même côté.

Selon un exemple de réalisation, le système de commandes de vol conforme à l'invention comprend des moyens de réglage du niveau d'effort de friction sur au moins une chaîne de commande mécanique, pour optimiser le paramètre de confort de pilotage notamment des chaînes de commande cycliques.

Selon un exemple de réalisation, le système de commandes de vol conforme à l'invention comprend des moyens pour augmenter la stabilité de l'aéronef.

Selon un exemple de réalisation du système de commandes de vol conforme à l'invention, les moyens pour augmenter la stabilité comprennent :

- un moyen d'actionnement à autorité limité en amplitude monté en série sur au moins une chaîne de commande de manière à agir sur l'organe mobile d'attitude en fonction d'une consigne de vol,

- un moyen de détermination de la marge d'amplitude du moyen d'actionnement à autorité limité en amplitude,

- un indicateur informant le pilote lorsque la marge d'amplitude est inférieure à une valeur déterminée et indiquant au pilote le sens de déplacement de l'organe de commande manuel pour rétablir une marge d'amplitude suffisante, ledit indicateur fournissant ainsi des informations à long terme d'attitude ou de contrôle de trajectoire,

- et des moyens pour rétablir la marge d'amplitude tout en conservant le positionnement de l'organe mobile d'attitude.

Selon un exemple de réalisation conforme à l'invention, le moyen de commande à distance est un commutateur installé sur une poignée de l'organe de commande.

Selon un exemple de réalisation conforme à l'invention, les moyens de réglage du niveau d'effort de friction sont associés à un organe de réglage à distance prévu sur l'organe de commande manuel.

Les objets assignés à l'invention sont également atteints à l'aide d'un système de pilotage automatique simplifié pour giravion comportant au moins un calculateur et des moyens logiciels pour mettre en oeuvre des fonctions de gestion d'un système de commandes de vol,

caractérisé en ce qu'il comprend :

- au moins un organe de commande manuel susceptible d'agir sur au moins un axe de commande de l'aéronef,

- au moins une chaîne mécanique de commande pour chaque axe de commande, ladite chaîne reliant l'organe de commande à au moins un organe mobile d'attitude de l'aéronef,

- un moyen d'actionnement à autorité limité en amplitude monté en série sur au moins une chaîne de commande, de manière à piloter la position de l'organe mobile d'attitude en fonction d'une consigne de vol et à agir si nécessaire sur l'organe mobile d'attitude pour modifier sa position,

- un moyen de détermination de la marge d'amplitude du moyen d'actionnement à autorité limité en amplitude,

- un indicateur informant le pilote lorsque la marge d'amplitude est inférieure à une valeur déterminée et indiquant au pilote le sens de déplacement de l'organe de commande manuel pour rétablir une marge d'amplitude suffisante, ledit indicateur fournissant ainsi des informations à long terme d'attitude ou de contrôle de trajectoire,

- des moyens pour rétablir la marge d'amplitude suffisante tout en conservant le positionnement de l'organe mobile d'attitude,

- et un dispositif de friction tel que décrit ci-dessus.

Selon un exemple de réalisation conforme à l'invention, l'organe de commande manuel est un manche cyclique, les axes de commande comprenant ainsi l'axe de commande en roulis et l'axe de commande en tangage.

Selon un exemple de réalisation conforme à l'invention, le système de pilotage automatique simplifié comprend une boucle de surveillance d'activité de pilotage manuel et des moyens de débrayage automatiques du dispositif de friction pour débrayer le dispositif de friction lorsqu'un seuil déterminé d'activité de pilotage manuel est atteint.

Les objets assignés à l'invention sont également atteints à l'aide d'un aéronef du genre giravion ou hélicoptère, comportant un système de commande de vol tel que décrit ci-dessus.

Les objets assignés à l'invention sont également atteints à l'aide d'un aéronef du genre giravion ou hélicoptère comportant un système de pilotage automatique simplifié tel que décrit ci-dessus.

Le dispositif de friction conforme à l'invention présente l'avantage de pouvoir agir simultanément sur la chaîne de commande de roulis et sur la chaîne de commande de tangage.

Le dispositif de friction conforme à l'invention présente ainsi l'avantage de procurer un gain en masse, comparativement à l'utilisation d'un mécanisme de friction spécifique sur chaque chaîne de commande.

Un autre avantage du dispositif de friction conforme à l'invention réside dans le fait qu'il est embrayable/débrayable à distance et sans effort de la part du pilote.

Un autre avantage du dispositif de friction conforme à l'invention, résulte de son encombrement faible, permettant une intégration plus aisée dans un système de commandes de vol d'un giravion. L'intégration au moins partielle du dispositif au tube de conjugaison de tangage, contribue substantiellement à cet encombrement réduit.

Par ailleurs, un dispositif de friction conforme à l'invention pourrait être installé sur des appareils de la flotte déjà en service et pas uniquement sur des appareils neufs.

En outre, le dispositif de friction conforme à l'invention a l'avantage de présenter une consommation électrique faible.

Le dispositif de friction conforme à l'invention présente également l'avantage de rattraper l'usure des pièces en contact établissant la friction, augmentant ainsi la longévité desdites pièces.

Le dispositif de friction conforme à l'invention présente également l'avantage de présenter un niveau de friction maximal. Ce niveau maximal de friction est choisi de manière à permettre, en cas de grippage du dispositif en position embrayée, au pilote de poursuivre le vol en pilotage manuel et d'atterrir en toute sécurité.

Un avantage du système de pilotage automatique simplifié conforme à l'invention réside dans la combinaison du dispositif de friction et des moyens augmentant la stabilité du giravion. La stabilisation à court terme est ainsi complétée par une stabilisation à long terme et ce, même en l'absence de vérins de trim.

Un avantage du système de commandes de vol conforme à l'invention, réside dans la possibilité de son utilisation sur des axes de commandes de vol de l'aéronef, équipés ou non de moyens d'augmentation de stabilité.

L'invention et ses avantages apparaîtront avec plus de détails dans le cadre de la description qui suit avec un exemple de réalisation donné à titre illustratif et non limitatif en référence aux figures annexées qui représentent :

- la figure 1, une illustration schématique partielle d'un exemple de réalisation d'un système de commande de vol conforme à l'invention et destiné à un hélicoptère,

- la figure 2, une illustration en coupe d'un exemple de réalisation d'un dispositif de friction conforme à l'invention, associé à un manche cyclique d'un hélicoptère, ledit dispositif de friction étant dans un état embrayé,

- la figure 3, une illustration en coupe d'un exemple de réalisation d'un dispositif de friction conforme à l'invention, associé à un manche cyclique d'un hélicoptère, ledit dispositif de friction étant dans un état débrayé,

- la figure 4, un détail agrandi des figures 2 et 3,

- et la figure 5, un exemple de réalisation d'un dispositif de friction conforme à l'invention, agissant sur un unique axe de commande d'un aéronef.

Les éléments structurellement et fonctionnellement identiques, présents dans plusieurs figures distinctes, sont affectés d'une seule et même référence numérique ou alphanumérique.

Même si dans la suite, il sera fait plus particulièrement référence à un hélicoptère, tout autre type d'aéronef, du genre giravion peut intégrer la présente invention.

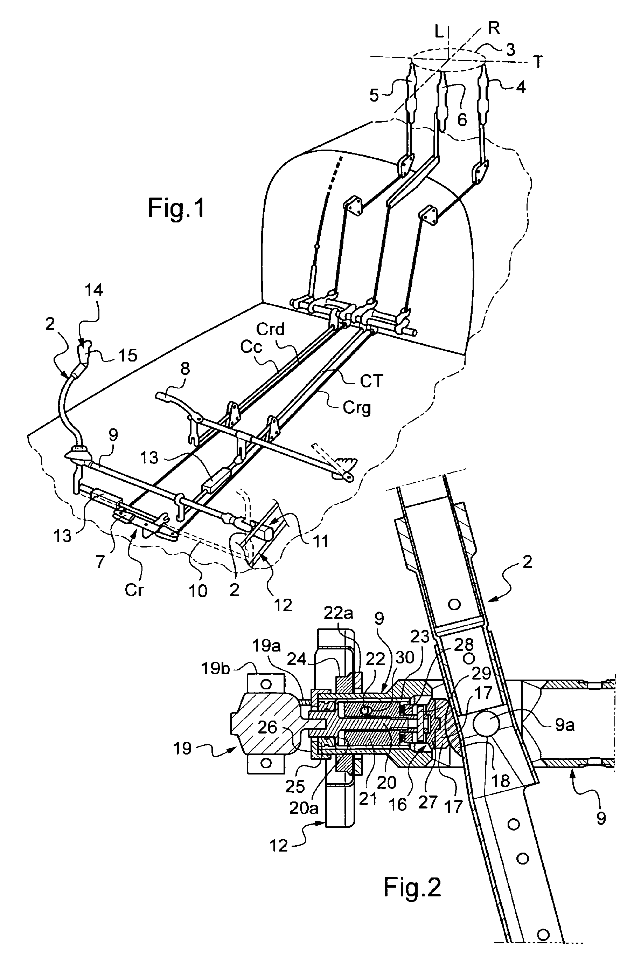

La figure 1 est une illustration schématique d'un exemple de réalisation d'un système de commandes de vol conforme à l'invention et destiné à un giravion du genre hélicoptère.

Le système de commandes de vol est destiné par exemple à un giravion comportant au moins un rotor principal.

Le système de commandes de vol comporte un organe de commande manuel 2 dédoublé agissant chacun sur au moins deux axes de commande du giravion, à savoir l'axe en tangage T et l'axe en roulis R. Une chaîne mécanique de commande gauche Crg et une chaîne mécanique de commande droite Crd, combinées par un mécanisme pivotant 7 relient ainsi l'organe de commande 2 à un plateau cyclique 3 du rotor principal via des servocommandes hydrauliques 4 et 5 pour contrôler le roulis. La combinaison des chaînes de commande gauche Crg et droite Crd constitue la chaîne de commande en roulis Cr.

Une chaîne mécanique de commande de tangage Ct relie l'organe de commande 2, en l'occurrence un manche cyclique, au plateau cyclique 3 via une servocommande hydraulique complémentaire 6, assurant ainsi le contrôle en tangage.

L'organe de commande 2 manuel est par exemple un manche cyclique agissant sur les axes de commande comprenant l'axe de commande en roulis et l'axe de commande en tangage.

A titre d'exemple, le système de commandes de vol conforme à l'invention comprend également un palonnier, non représenté, en tant qu'organe de commande complémentaire pour agir sur un rotor anti-couple, les axes de commande comprenant ainsi un axe de commande en lacet L.

Le système de commandes de vol conforme à l'invention peut comprendre également un manche collectif 8 en tant qu'organe de commande complémentaire pour agir sur le pas collectif du rotor principal, les axes de commande comprenant ainsi un axe de commande en pas collectif. Lors du déplacement du manche collectif 8, les servocommandes hydrauliques 4,5,6 agissent simultanément et avec la même amplitude. Une chaîne mécanique de commande spécifique Cc est prévue à cet effet. D'autres mécanismes de transmission et de renvois du système de commandes de vol sont très largement connus et ne sont pas décrits davantage dans la présente.

Selon un exemple de réalisation, le système de commandes de vol conforme à l'invention comprend deux manches cycliques reliés entre eux par un tube de conjugaison de tangage 9 sur lequel ils sont articulés. Une tige de liaison 10 reliant les extrémités inférieures des manches cycliques permet de transmettre les commandes en roulis d'un manche à l'autre.

Le système de commandes de vol conforme à l'invention comprend un dispositif de friction 11 constituant un prolongement du tube de conjugaison de tangage 9. Ce prolongement est monté rotatif sur un longeron 12 de la structure du giravion.

Selon un exemple de réalisation, le système de commandes de vol conforme à l'invention comprend des moyens de réglage du niveau d'effort de friction, non représentés, pour optimiser le paramètre de confort de pilotage notamment des chaînes de commande cycliques. Les moyens de réglage du niveau d'effort de friction sont par exemple associés à un organe de réglage à distance prévu sur le manche cyclique.

Selon un exemple de réalisation, le système de commandes de vol conforme à l'invention comprend des moyens pour augmenter la stabilité du giravion.

Selon un exemple de réalisation du système de commande de vol conforme à l'invention, les moyens pour augmenter la stabilité comprennent un moyen d'actionnement à autorité limité en amplitude 13 monté en série sur chaque chaîne de commande Cr, et Ct, de manière à agir sur l'organe mobile d'attitude, notamment le plateau cyclique 3 en fonction d'une consigne de vol. Ces moyens d'actionnement à autorité limitée en amplitude 13 sont par exemple des vérins électriques.

Le système de commandes de vol conforme à l'invention comprend également un moyen de détermination de la marge d'amplitude du moyen d'actionnement à autorité limitée en amplitude 13. Ce moyen de détermination de la marge d'amplitude comprend par exemple un ou plusieurs capteurs de position.

Le système de commandes de vol conforme à l'invention comprend également un indicateur informant le pilote lorsque la marge d'amplitude est inférieure à une valeur déterminée, par exemple 10% de la course totale et indiquant au pilote le sens de déplacement de l'organe de commande 2 manuel pour rétablir une marge d'amplitude suffisante, ledit indicateur fournissant ainsi des informations à long terme d'attitude ou de contrôle de trajectoire.

Le système de commandes de vol conforme à l'invention comprend également des moyens pour rétablir la marge d'amplitude tout en conservant le positionnement de l'organe mobile, par exemple le plateau cyclique 3. Les moyens pour rétablir la marge d'amplitude comprennent par exemple un calculateur spécifique ou un calculateur intégré à un système de pilotage automatique pour compenser automatiquement le rétablissement de la marge d'amplitude. Des capteurs, du genre capteurs à effet Hall, permettent de déterminer le déplacement de l'organe de commande 2 et l'amplitude du moyen d'actionnement à autorité limitée 13. Les moyens pour rétablir une marge d'amplitude suffisante, commandent alors un déplacement en sens inverse à l'ordre provenant de l'organe de commande 2 (raccourcissement ou élongation des vérins séries) pour ne pas modifier le positionnement de l'organe mobile d'attitude. Le rétablissement de la marge d'amplitude correspond par exemple à un recentrage des vérins séries.

Selon un exemple de réalisation conforme à l'invention, le dispositif de friction est activé et désactivé par l'intermédiaire d'un moyen de commande à distance 14 du genre commutateur, installé sur une poignée 15 de l'organe de commande 2.

La figure 2 est une illustration en coupe d'un exemple de réalisation du dispositif de friction conforme à l'invention, associé à l'organe de commande 2 du genre un manche cyclique d'un hélicoptère, ledit dispositif de friction étant dans un état embrayé et par conséquent actif.

Le dispositif de friction conforme à l'invention comporte une pièce de contact 16 mobile entre une position stable débrayée et une position stable embrayée et inversement. La position stable embrayée correspond à une position dans laquelle la pièce de contact 16 est en appui sur l'organe de commande 2 de manière à établir une force de friction déterminée.

Selon un exemple de réalisation conforme à l'invention, la pièce de contact 16 comporte une garniture femelle 17 de forme hémisphérique destinée à venir en appui sur une garniture mâle 18 de forme hémisphérique complémentaire, fixée sur l'organe de commande 2, pour établir la friction. Le centre de la garniture mâle 18 hémisphérique coïncidant avec le point d'intersection de l'axe dudit tube de conjugaison de tangage 9 et de l'axe de rotation en roulis 9a du manche cyclique coopérant directement avec le dispositif de friction 11.

Le dispositif de friction conforme à l'invention comporte des moyens d'entraînement électromécaniques pour déplacer la pièce de contact 16 entre les deux positions stables. Le moyen de commande à distance 14 permet d'activer et de désactiver les moyens d'entraînement.

Selon un exemple de réalisation conforme à l'invention, les moyens d'entraînement comprennent un moteur électrique 19 entraînant en rotation un arbre fileté

20 sur lequel est monté un écrou 21 solidaire de la pièce de contact 16. L'écrou 21 est bloqué en rotation grâce un doigt d'arrêt 22 dont une extrémité est engagée transversalement dans ledit écrou 21, de manière à imposer un déplacement en translation dudit écrou 21 dans une chemise de guidage 23 sous l'effet de la rotation de l'arbre fileté 20.

Au moins un arbre de fixation 19a permet de fixer le moteur électrique 19 sur le côté extérieur du longeron 12. Plus précisément, le couple du moteur électrique 19 est repris par un support 19b serré sur le carter du moteur électrique 19 et fixé sur le longeron 12 par l'intermédiaire d'au moins un arbre de fixation 19a.

Le doigt d'arrêt 22 est fixé sur le longeron 12 par l'intermédiaire d'une plaque de fixation 22a.

Le guidage en rotation du tube de conjugaison de tangage 9 dans le longeron 12 est assuré par un roulement 24.

Une butée à billes 25 reprend l'effort d'appui de l'arbre fileté 20, lequel presse la pièce de contact 16 contre la garniture mâle 18. La butée à billes 25 est par ailleurs arrêtée en translation par un chapeau 26, fixé sur l'extrémité du tube de conjugaison de tangage 9. La butée à billes 25 est prise en sandwich entre un épaulement 20a de l'arbre fileté 20 et le chapeau 26.

Selon un exemple de réalisation, le dispositif conforme à l'invention comprend des moyens de compensation pour rattraper automatiquement l'usure liée à la friction de la garniture femelle 17 sur la garniture mâle 18.

Selon un exemple de réalisation conforme à l'invention, les moyens de compensation comprennent d'une part un support de garniture 27 monté coulissant et bloqué en rotation sur une portion d'extrémité de l'écrou 21 présentant un diamètre plus faible que le diamètre de la portion complémentaire dudit écrou 21 et d'autre part un ressort 28 monté sur la portion d'extrémité de l'écrou 21 de diamètre plus faible, entre le support de garniture 27 et un épaulement 21 a réalisé par la portion complémentaire dudit écrou 21.

Le ressort 28 est comprimé lorsque la friction est établie. Une goupille 29 traversant le support de garniture 27 et une fente longitudinale de la portion d'extrémité de l'écrou 21, permet de bloquer en rotation ledit support de garniture 27. La goupille 29 présente un jeu en translation suffisant pour permettre au ressort 28 de pousser le support de garniture 27 contre la garniture mâle 18. On pourra se reporter à la figure 2. L'écrou 21 entraîne donc en translation le support de garniture 27 par l'intermédiaire du ressort 28. Le contact entre les garnitures mâle 18 et femelle 17 est donc maintenu indépendamment de l'usure desdites garnitures.

Selon un exemple de réalisation, le dispositif conforme à l'invention comporte des moyens de limitation pour limiter automatiquement la force de friction à un seuil de friction maximal déterminé.

Selon un exemple de réalisation conforme à l'invention, les moyens de limitation comprennent une lumière oblongue 30 ménagée latéralement dans le corps de l'écrou 21 et dans laquelle est engagée l'extrémité du doigt d'arrêt 22. La direction longitudinale de la lumière oblongue 30 est parallèle à l'axe de l'écrou 21. Cette lumière oblongue 30 limite ainsi la course en translation de l'écrou 21 à une distance correspondant à la dimension longitudinale de ladite lumière oblongue 30 et limite par conséquent la compression du ressort 28.

Selon un exemple de réalisation, le dispositif conforme à l'invention comporte des moyens de réglage du niveau d'effort de friction. Le moteur électrique 19 peut être à cet effet un moteur pas à pas pour procéder à un réglage précis de la compression du ressort 28.

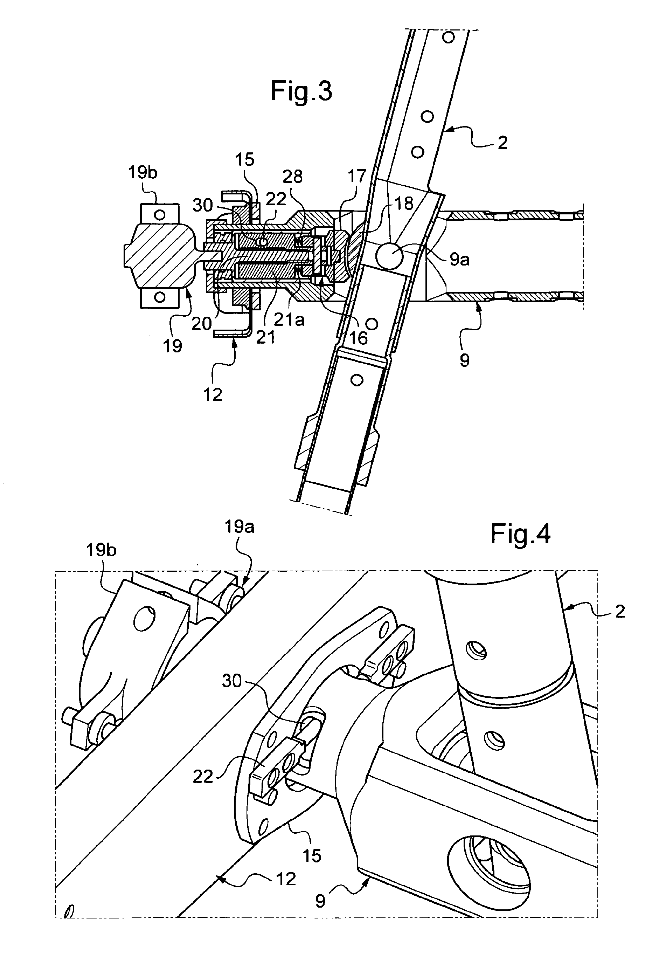

La figure 3 est une illustration en coupe d'un exemple de réalisation d'un dispositif de friction conforme à l'invention, associé à un manche cyclique d'un hélicoptère, ledit dispositif de friction étant dans un état débrayé.

La figure 4 est par exemple un agrandissement en vue externe des éléments représentés dans les figures 2 et 3.

La garniture femelle 17 n'est plus en contact de friction avec la garniture mâle 18. Le moteur électrique 19 permet de déplacer l'écrou 21 en translation sur une course suffisante de manière à ce que le ressort 28 ne soit moins comprimé. Cette course est déterminée par la dimension longitudinale de la lumière oblongue 30. Le support de garniture 27 est donc entraîné en position débrayée par l'intermédiaire de la goupille 29 sur laquelle il prend appui en arrivant en butée du jeu mécanique de translation.

La présente invention concerne également un système de pilotage automatique simplifié pour giravion comportant au moins un calculateur et des moyens logiciels pour mettre en oeuvre des fonctions de gestion du système de commande de vol.

Le système de pilotage automatique simplifié comprend :

- l'organe de commande manuel 2 dédoublé susceptible d'agir sur au moins deux axes de commande du giravion,

- au moins une chaîne mécanique de commande Cr, Ct pour chaque axe de commande, ladite chaîne reliant l'organe de commande 2 à au moins un organe mobile d'attitude du giravion,

- le moyen d'actionnement à autorité limité en amplitude 13 monté en série sur chaque chaîne de commande Cr, Ct, de manière à déterminer la position de l'organe mobile d'attitude en fonction d'une consigne de vol et à agir si nécessaire sur l'organe mobile d'attitude pour modifier sa position,

- le moyen de détermination de la marge d'amplitude du moyen d'actionnement à autorité limité en amplitude 13,

- l'indicateur informant le pilote lorsque la marge d'amplitude est inférieure à une valeur déterminée et indiquant au pilote le sens de déplacement de l'organe de commande manuel 2 pour rétablir une marge d'amplitude suffisante, ledit indicateur fournissant ainsi des informations à long terme d'attitude ou de contrôle de trajectoire,

- les moyens pour rétablir la marge d'amplitude suffisante tout en conservant le positionnement de l'organe mobile d'attitude,

- et le dispositif de friction 11 conforme à l'invention.

Selon un exemple de réalisation conforme à l'invention, le système de pilotage automatique simplifié comprend une boucle de surveillance d'activité de pilotage manuel et des moyens de débrayage automatique du dispositif de friction lorsqu'un seuil déterminé d'activité de pilotage manuel est atteint.

Le système de pilotage automatique comprend par exemple un capteur de déplacement sur chaque chaîne de commande cyclique de manière à disposer à chaque instant d'une information correspondant à la position instantanée Pos du manche cyclique. Le système de pilotage automatique calcule alors en permanence la position moyenne Posm du manche cyclique sur une période glissante T.

A cette fin on utilise la fonction :

$$E = \frac{1}{T} \times \sum_T \left( Pos - Posm \right)^2$$

calculée à chaque instant, qui est révélatrice de l'activité du pilote. Lorsqu'un seuil minimal pour la fonction E est dépassé, le système de pilotage automatique commande automatiquement le débrayage du dispositif de friction 11.

Afin d'éviter tout débrayage du dispositif de friction alors que le pilote n'a pas la main sur le manche cyclique, il peut être prévu de disposer un détecteur de présence du genre détecteur thermique ou détecteur de pression, sur la poignée 15 dudit manche cyclique. Ceci constitue alors une condition supplémentaire à satisfaire pour commander le débrayage automatique du dispositif de friction.

Une telle boucle de surveillance peut aussi être prévue sur les organes de commande complémentaires tels que le manche collectif 8 et/ou le palonnier.

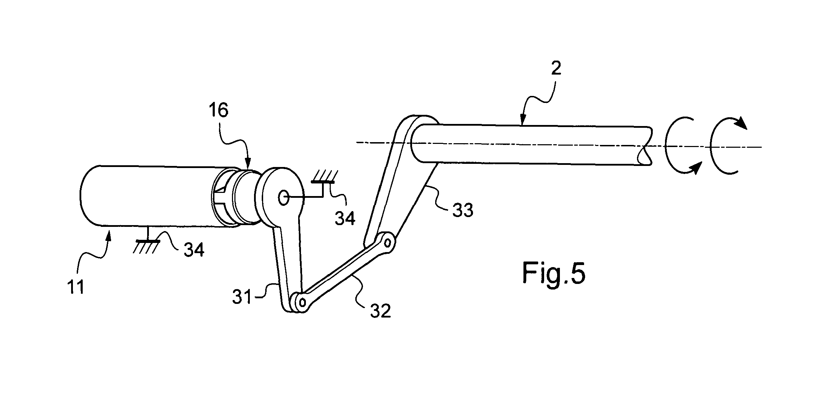

La figure 5 représente un exemple de réalisation d'un dispositif de friction 11 conforme à l'invention, agissant sur l'organe de commande manuel 2 d'un aéronef. L'organe de commande 2, matérialisé par un arbre rotatif, agit par exemple sur un unique axe de commande d'un avion ou d'un hélicoptère. Il peut s'agir par exemple de l'axe de commande du pas collectif ou de l'axe de commande du palonnier d'un hélicoptère ou d'un axe de commande d'attitude d'un avion.

La pièce de contact 16 vient en friction avec un système de bielles 31,32,33 de l'organe de commande manuel 2 lorsque le dispositif de friction 11 est embrayé. Le dispositif de friction 11 et la bielle 31 contre laquelle vient s'appuyer la pièce de contact 16 sont immobilisés en translation sur une partie de structure 34 fixe de l'aéronef.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif de friction (11) pour maintenir dans une position déterminée un organe de commande manuel (2) d'un aéronef,
   **caractérisé en ce qu'**il comporte:

   - une pièce de contact (16) mobile entre une position stable débrayée et une position stable embrayée et inversement, ladite position stable embrayée correspondant à une position dans laquelle la pièce de contact (16) est en appui sur l'organe de commande (2) de manière à établir une force de friction déterminée,
   - des moyens d'entraînement électromécaniques pour déplacer la pièce de contact entre les deux positions stables,
   - et un moyen de commande à distance (14) pour activer et désactiver les moyens d'entraînement.

2. Dispositif de friction (11) selon la revendication 1,
   **caractérisé en ce qu'**il comprend des moyens de compensation pour rattraper automatiquement l'usure des parties réalisant la friction.

3. Dispositif de friction (11) selon la revendication 1 ou 2,
   **caractérisé en ce qu'**il comporte des moyens de limitation pour limiter automatiquement la force de friction à un seuil de friction maximal déterminé.

4. Dispositif de friction (11) selon l'une quelconque des revendications 1 à 3,
   **caractérisé en ce qu'**il comporte des moyens de réglage du niveau d'effort de friction.

5. Dispositif de friction (11) selon l'une quelconque des revendications 1 à 4,
   **caractérisé en ce que** les moyens d'entraînement comprennent un moteur électrique (19) entraînant en rotation un arbre fileté (20) sur lequel est monté un écrou (21) solidaire de la pièce de contact (16), ledit écrou (21) étant bloqué en rotation grâce un doigt d'arrêt (22) fixe dont une extrémité est engagée transversalement dans ledit écrou (21), de manière à imposer un déplacement en translation dudit écrou (21) dans une chemise de guidage (23) sous l'effet de la rotation de l'arbre fileté (20).

6. Dispositif de friction (11) selon les revendications 5 et 2,
   **caractérisé en ce que** les moyens de compensation comprennent d'une part un support de garniture (27) monté coulissant et bloqué en rotation sur une portion d'extrémité de l'écrou (21) présentant un diamètre plus faible que le diamètre de la portion complémentaire dudit écrou (21) et d'autre part un ressort (28) monté sur la portion d'extrémité de l'écrou (21) entre le support de garniture (27) et un épaulement (21a) réalisé par la portion complémentaire, ledit ressort (28) étant comprimé lorsque la friction est établie.

7. Dispositif de friction (11) selon les revendications 5 et 3 ou 6 et 3,
   **caractérisé en ce que** les moyens de limitation comprennent une lumière oblongue (30) ménagée dans l'écrou (21) et dans laquelle est engagée l'extrémité du doigt d'arrêt (22), limitant ainsi la course en translation de l'écrou (21) à une distance correspondant à la dimension longitudinale de la lumière oblongue (30) et limitant par conséquent la compression du ressort (28).

8. Dispositif de friction (11) selon l'une quelconque des revendications 1 à 7,
   **caractérisé en ce que** la pièce de contact (16) comporte une garniture femelle (17) de forme hémisphérique destinée à venir en appui sur une garniture mâle (18) de forme hémisphérique complémentaire fixée sur l'organe de commande (2), pour établir la friction.

9. Dispositif de friction (11) selon l'une quelconque des revendications 1 à 8,
   **caractérisé en ce que** l'organe de commande (2) est un manche cyclique d'un giravion du genre hélicoptère.

10. Système de commandes de vol pour aéronef comportant au moins un organe mobile d'attitude de l'aéronef, comprenant :

    - au moins un organe de commande manuel (2,8) agissant sur au moins deux axes de commande de l'aéronef,
    - et au moins une chaîne mécanique de commande (Cr,Ct,Cc,Cl) pour chaque axe de commande, chaque chaîne mécanique de commande (Cr,Ct,Cc,Cl) reliant un organe de commande (2,8) à au moins un organe mobile d'attitude de l'aéronef,

    **caractérisé en ce qu'**il comprend un dispositif de friction (11) conforme à l'une quelconque des revendications 1 à 9 sur au moins une chaîne mécanique de commande (Cr,Ct,Cc,Cl).

11. Système de commandes de vol selon la revendication 10,
    **caractérisé en ce que** l'organe de commande manuel (2) est un manche cyclique et **en ce que** l'organe mobile d'attitude est un plateau cyclique (3) piloté par des servocommandes (4,5,6), les axes de commande comprenant ainsi l'axe de commande en roulis (R) et l'axe de commande en tangage (T) de l'aéronef.

12. Système de commandes de vol selon la revendication 11,
    **caractérisé en ce qu'**il comprend deux manches cycliques reliés entre eux par un tube de conjugaison de tangage (9) sur lequel ils sont articulés, le dispositif de friction (11) constituant un prolongement d'un côté dudit tube de conjugaison de tangage (9) monté rotatif sur un longeron (12) de la structure de l'aéronef et le centre de la garniture mâle (18) hémisphérique coïncidant avec le point d'intersection de l'axe dudit tube de conjugaison de tangage (9) et de l'axe de rotation en roulis du manche cyclique situé du même côté que ledit prolongement.

13. Système de commandes de vol selon l'une quelconque des revendications 10 à 12,
    **caractérisé en ce qu'**il comprend un palonnier en tant qu'organe de commande pour agir par exemple sur un rotor anti-couple, l'un des axes de commande représentant ainsi un axe de commande en lacet (L) de l'aéronef.

14. Système de commandes de vol selon l'une quelconque des revendications 10 à 13,
    **caractérisé en ce qu'**il comprend un manche collectif (8) en tant qu'organe de commande pour agir sur le pas collectif d'un rotor principal, l'un des axes de commande représentant ainsi un axe de commande du pas collectif de l'aéronef.

15. Système de commandes de vol selon l'une quelconque des revendications 10 à 14,
    **caractérisé en ce qu'**il comprend des moyens de réglage du niveau d'effort de friction sur au moins une chaîne de commande mécanique pour optimiser le paramètre de confort de pilotage notamment des chaînes de commande cycliques.

**16.** Système de commandes de vol selon l'une quelconque des revendications 10 à 15, **caractérisé en ce qu'**il comprend des moyens pour augmenter la stabilité de l'aéronef.

**17.** Système de commandes de vol selon la revendication 16, **caractérisé en ce que** les moyens pour augmenter la stabilité comprennent :

- un moyen d'actionnement à autorité limité en amplitude (13) monté en série sur au moins une chaîne de commande (Ct,Cr,Cc,Cl) de manière à agir sur un organe mobile d'attitude en fonction d'une consigne de vol,
- un moyen de détermination de la marge d'amplitude du moyen d'actionnement à autorité limité en amplitude (13),
- un indicateur informant le pilote lorsque la marge d'amplitude est inférieure à une valeur déterminée et indiquant au pilote le sens de déplacement de l'organe de commande manuel (2,8) pour rétablir une marge d'amplitude suffisante, ledit indicateur fournissant ainsi des informations à long terme d'attitude ou de contrôle de trajectoire,
- et des moyens pour rétablir la marge d'amplitude tout en conservant le positionnement de l'organe mobile d'attitude.

**18.** Système de commandes de vol selon l'une quelconque des revendications 10 à 17, **caractérisé en ce que** le moyen de commande à distance est un commutateur installé sur une poignée (15) de l'organe de commande (2,8).

**19.** Système de commandes de vol selon la revendication 15, **caractérisé en ce que** les moyens de réglage du niveau d'effort de friction sont associés à un organe de réglage à distance prévu sur l'organe de commande (2,8).

**20.** Système de pilotage automatique simplifié pour aéronef comportant au moins un calculateur et des moyens logiciels pour mettre en oeuvre des fonctions de gestion d'un système de commandes de vol, **caractérisé en ce qu'**il comprend :

- au moins un organe de commande manuel (2,8) susceptible d'agir sur au moins un axe de commande de l'aéronef,
- au moins une chaîne mécanique de commande (Ct,Cr,Cc,Cl) pour chaque axe de commande, ladite chaîne reliant l'organe de commande à au moins un organe mobile d'attitude de l'aéronef,
- un moyen d'actionnement à autorité limité en amplitude (13) monté en série sur au moins une chaîne de commande, de manière à piloter la position de l'organe mobile d'attitude en fonction d'une consigne de vol et à agir si nécessaire sur l'organe mobile d'attitude pour modifier sa position,
- un moyen de détermination de la marge d'amplitude du moyen d'actionnement à autorité limité en amplitude (13),
- un indicateur informant le pilote lorsque la marge d'amplitude est inférieure à une valeur déterminée et indiquant au pilote le sens de déplacement de l'organe de commande manuel pour rétablir une marge d'amplitude suffisante, ledit indicateur fournissant ainsi des informations à long terme d'attitude ou de contrôle de trajectoire,
- des moyens pour rétablir la marge d'amplitude suffisante tout en conservant le positionnement de l'organe mobile d'attitude,
- et un dispositif de friction (11) conforme à l'une quelconque des revendications 1 à 9.

**21.** Système de pilotage automatique simplifié selon la revendication 20, **caractérisé en ce que** l'organe de commande manuel (2) est un manche cyclique, les axes de commande comprenant ainsi l'axe de commande en roulis (R) et l'axe de commande en tangage (T).

**22.** Système de pilotage automatique simplifié, selon la revendication 20 ou 21, **caractérisé en ce qu'**il comprend une boucle de surveillance d'activité de pilotage manuel et des moyens de débrayage automatiques du dispositif de friction (11) pour débrayer ledit dispositif de friction (11) lorsqu'un seuil déterminé d'activité de pilotage manuel est atteint.

**23.** Aéronef du genre giravion ou hélicoptère comportant un système de commandes de vol conforme à l'une quelconque des revendications 10 à 19.

**24.** Aéronef du genre giravion ou hélicoptère comportant un système de pilotage automatique simplifié conforme à l'une quelconque des revendications 20 à 22.

**Patentansprüche**

**1.** Reibungsvorrichtung (11) zum Halten eines manuellen Steuerorgans (2) eines Luftfahrzeugs in einer bestimmten Stellung, **gekennzeichnet durch**

- ein Kontaktstück (16), das beweglich ist zwischen einer stabilen ausgekuppelten Stellung und einer stabilen eingekuppelten Stellung, und umgekehrt, wobei die stabile eingekuppelte Stellung einer Stellung entspricht, in der das Kontaktstück (16) gegen das Steuerorgan (2) andrückt, derart, dass eine bestimmte Reibungskraft erzeugt wird,

- elektromechanische Antriebsmittel zum Bewegen des Kontaktstücks zwischen zwei stabilen Stellungen,

- und ein Fernbedienungsmittel (14) zum Aktivieren und Deaktivieren der Antriebsmittel.

2. Reibungsvorrichtung (11) nach Anspruch 1, **gekennzeichnet durch** Kompensationsmittel zum automatischen Ausgleichen der Abnutzung von Teilen, die die Reibung bewirken.

3. Reibungsvorrichtung (11) nach Anspruch 1 oder 2, **gekennzeichnet durch** Begrenzungsmittel zum automatischen Begrenzen der Reibungskraft auf einen bestimmten maximalen Reibungsschwellenwert.

4. Reibungsvorrichtung (11) nach einem der Ansprüche 1 bis 3, **gekennzeichnet durch** Mittel zum Einstellen der Höhe der Reibungskraft.

5. Reibungsvorrichtung (11) nach einem der Ansprüche 1 bis 4, **dadurch gekennzeichnet, dass** die Antriebsmittel einen elektrischen Motor (19) aufweisen, der eine mit einem Gewinde versehene Welle (20) zu einer Drehbewegung antreibt, auf der eine Mutter (21) montiert ist, die mit dem Kontaktstück (16) fest verbunden ist, wobei die Mutter (21) gegenüber einer Rotation blockiert ist durch einen festen Haltestift (22), dessen eines Ende in Querrichtung in die Mutter (21) derart eingeführt ist, dass er eine Translationsbewegung der Mutter (21) in einer Führungsbuchse (23) unter der Wirkung der Drehung der mit einem Gewinde versehenen Welle (20) aufzwingt.

6. Reibungsvorrichtung (11) nach den Ansprüchen 5 und 2, **dadurch gekennzeichnet, dass** die Kompensationsmittel einerseits einen Einsatzträger (27), der gleitend und drehblockiert auf einem Endbereich der Mutter (21) montiert ist, der einen kleineren Durchmesser als der Durchmesser des komplementären Bereichs der Mutter (21) hat, und andererseits eine Feder (28) aufweisen, die auf dem Endbereich der Mutter (21) zwischen dem Einsatzträger (27) und einer Schulter (21a), die durch den komplementären Bereich gebildet wird, montiert ist, wobei die Feder (28) komprimiert ist, wenn die Reibung stattfindet.

7. Reibungsvorrichtung (11) nach den Ansprüchen 5 und 3 oder 6 und 3, **dadurch gekennzeichnet, dass** die Begrenzungsmittel ein Langloch (30) aufweisen, das in die Mutter (21) eingearbeitet ist und in das das Ende des Haltestifts (22) eingeführt ist, wodurch somit die Translationsbewegung der Mutter (21) auf einen Abstand begrenzt wird, der der Abmessung des Langlochs (30) in Längsrichtung entspricht und somit die Kompression der Feder (28) begrenzt.

8. Reibungsvorrichtung (11) nach einem der Ansprüche 1 bis 7, **dadurch gekennzeichnet, dass** das Kontaktstück (16) einen weiblichen Einsatz (17) mit halbkugeliger Form aufweist, der dazu bestimmt ist, gegen einen männlichen Einsatz (18) mit einer komplementären halbkugeligen Form, der auf dem Steuerorgan (2) befestigt ist, anzudrücken, um die Reibung zu erzeugen.

9. Reibungsvorrichtung (11) nach einem der Ansprüche 1 bis 8, **dadurch gekennzeichnet, dass** das Steuerorgan (2) ein zyklischer Steuerknüppel eines Drehflügelflugzeugs vom Typ Hubschrauber ist.

10. Flugsteuerungssystem für ein Luftfahrzeug mit mindestens einem beweglichen Organ zur Einstellung der Lage des Luftfahrzeugs, mit:

- mindestens einem manuellen Steuerorgan (2, 8), das auf mindestens zwei Steuerachsen des Luftfahrzeugs einwirkt,
- und mindestens einer mechanischen Steuerkette (Cr, Ct, Cc, Cl) für jede Steuerachse, wobei jede mechanische Steuerkette (Cr, Ct, Cc, Cl) ein Steuerorgan (2, 8) mit mindestens einem beweglichen Organ zur Einstellung der Lage des Luftfahrzeugs verbindet,

**gekennzeichnet durch** eine Reibungsvorrichtung (11) nach einem der Ansprüche 1 bis 9 in mindestens einer mechanischen Steuerkette (Cr, Ct, Cc, Cl).

11. Flugsteuerungssystem nach Anspruch 10, **dadurch gekennzeichnet, dass** das manuelle Steuerorgan (2) ein zyklischer Steuerknüppel ist, und dadurch, dass das bewegliche Organ zur Einstellung der Lage eine Taumelscheibe (3) ist, die durch Servosteuerung (4, 5, 6) gesteuert wird, wobei die Steuerachsen somit die Rollsteuerachse (R) und die Nicksteuerachse (T) des Luftfahrzeugs umfassen.

12. Flugsteuerungssystem nach Anspruch 11, **gekennzeichnet durch** zwei zyklische Steuerknüppel, die miteinander **durch** ein Nickbewegungskombinationsrohr (9) verbunden sind, auf dem sie angelenkt sind, wobei die Reibungsvorrichtung (11) eine Verlängerung einer Seite des Nickbewegungskombinationsrohrs (9) bildet, das drehbar auf einem Längsträger (12) des Aufbaus des Luftfahrzeugs montiert ist, und wobei die Mitte des halbkugelförmigen männlichen Einsatzes (18) mit dem Schnittpunkt der Achse des Nickbewegungskombinationsrohrs (9) und der Rollbewegungsrotationsachse des zyklischen Steuerknüppels zusammenfällt, der auf derselben Seite wie die Verlängerung gelegen ist.

13. Flugsteuerungssystem nach einem der Ansprüche 10 bis 12,
**gekennzeichnet durch** einen Steuerknüppel als Steuerorgan um zum Beispiel auf einen Drehmomentausgleichsrotor zu agieren,
wobei eine der Steuerachsen somit eine Steuerachse des Gierwinkels (L) des Luftfahrzeugs darstellt.

14. Flugsteuerungssystem nach einem der Ansprüche 10 bis 13,
**gekennzeichnet durch** einen Kollektivsteuerknüppel (8) als ein Steuerorgan zum Einwirken auf den Pitch eines Hauptrotors, wobei eine der Steuerachsen somit eine Steuerachse des Pitches des Luftfahrzeugs darstellt.

15. Flugsteuerungssystem nach einem der Ansprüche 10 bis 14,
**gekennzeichnet durch** Mittel zum Regeln der Höhe der Reibungskraft in mindestens einer mechanischen Steuerkette zur Optimierung des Parameters des Steuerungskomforts, insbesondere der Pitch-Steuerketten.

16. Flugsteuerungssystem nach einem der Ansprüche 10 bis 15,
**gekennzeichnet durch** Mittel zur Erhöhung der Stabilität des Luftfahrzeugs.

17. Flugsteuerungssystem nach Anspruch 16,
**dadurch gekennzeichnet, dass** die Mittel zur Erhöhung der Stabilität aufweisen:

- einen Stellantrieb (13) mit begrenzter Amplitude, der in Reihe in einer Steuerkette (Ct, Cr, Cc, Cl) angeordnet ist, derart, dass er in Abhängigkeit von einem Flug-Sollwert auf ein bewegliches Organ zur Einstellung der Lage des Luftfahrzeugs einwirkt,
- ein Mittel zur Bestimmung des Amplitudenspielraums des Stellantriebs (13) mit begrenzter Amplitude,
- eine Anzeige, die den Piloten informiert, wenn der Amplitudenspielraum kleiner ist als ein bestimmter Wert, und die dem Piloten die Richtung der Bewegung des manuellen Steuerorgans (2, 8) angibt zur Wiederherstellung eines ausreichenden Amplitudenspielraums, wobei die Anzeige somit langfristige Informationen über die Lage oder die Steuerung der Flugbahn des Luftfahrzeugs angibt,
- und Mittel zum Wiederherstellen des Amplitudenspielraums, wobei die Stellung des beweglichen Organs zur Einstellung der Lage beibehalten wird.

18. Flugsteuerungssystem nach einem der Ansprüche 10 bis 17,
**dadurch gekennzeichnet, dass** das Fernbedienungsmittel ein Schalter ist, der auf einem Knauf (15) des Steuerorgans (2, 8) installiert ist.

19. Flugsteuerungssystem nach Anspruch 15,
**dadurch gekennzeichnet, dass** die Mittel zur Einstellung der Höhe der Reibungskraft mit einem Fernregelungsorgan verbunden sind, das auf dem Steuerorgan (2, 8) vorgesehen ist.

20. Vereinfachtes System der automatischen Steuerung eines Luftfahrzeugs mit mindestens einem Rechner und Programmen zur Durchführung von Funktionen des Betriebs eines Flugsteuerungssystems,
**gekennzeichnet durch**:

- mindestens ein manuelles Steuerorgan (2, 8), das auf mindestens eine Steuerachse des Luftfahrzeugs einwirken kann,
- mindestens eine mechanische Steuerkette (Ct, Cr, Cc, Cl) für jede Steuerachse, wobei die Kette das Steuerorgan mit mindestens einem beweglichen Organ zur Einstellung der Lage des Luftfahrzeugs verbindet,
- einen Stellantrieb mit begrenzter Amplitude (13), der in Reihe in mindestens einer Steuerkette montiert ist, derart, dass die Stellung des beweglichen Organs zur Einstellung der Lage des Luftfahrzeugs in Abhängigkeit von einem Flug-Sollwert gesteuert wird, und falls nötig auf das bewegliche Organ zur Einstellung der Lage des Luftfahrzeugs eingewirkt wird, um dessen Stellung zu ändern,
- ein Mittel zur Bestimmung des Amplitudenspielraums des Stellantriebs mit begrenzter Amplitude (13),
- eine Anzeige, die den Piloten informiert, wenn der Amplitudenspielraum kleiner ist als ein bestimmter Wert, und die dem Piloten die Richtung der Bewegung des manuellen Steuerorgans anzeigt, um einen ausreichenden Amplitudenspielraum wiederherzustellen, wodurch die Anzeige somit langfristige Informationen über die Lage des Luftfahrzeugs oder die Steuerung der Flugbahn liefert,
- Mittel zum Wiederherstellen des ausreichenden Amplitudenspielraums unter Beibehaltung der Stellung des beweglichen Organs zur Einstellung der Lage des Luftfahrzeugs,
- und eine Reibungsvorrichtung (11) gemäß einem der Ansprüche 1 bis 9.

21. Vereinfachtes System zur automatischen Steuerung nach Anspruch 20,
**dadurch gekennzeichnet, dass** das manuelle Steuerorgan (2) ein zyklischer Steuerknüppel ist, wobei die Steuerachsen somit die Steuerachse der Rollbewegung (R) und die Steuerachse der Nickbewegung (T) umfassen.

22. Vereinfachtes System zur automatischen Steuerung nach Anspruch 20 oder 21,
**gekennzeichnet durch** eine Schaltung zur Überwachung der Aktivität bei manueller Steuerung und **durch** Mittel zur automatischen Auskupplung der Reibungsvorrichtung (11), um die Reibungsvorrichtung (11) auszukuppeln, wenn ein bestimmter Schwellenwert der manuellen Steuerungsaktivität erreicht ist.

23. Luftfahrzeug vom Typ Drehflügelflugzeug oder Hubschrauber mit einem Flugsteuerungssystem nach einem der Ansprüche 10 bis 19.

24. Luftfahrzeug vom Typ Drehflügelflugzeug oder Hubschrauber mit einem vereinfachten System zur automatischen Steuerung nach einem der Ansprüche 20 bis 22.


**Claims**

1. Friction device (11) for maintaining a manual control member (2) of an aircraft in a determined position, **characterised in that** it comprises:

   - a contact part (16) movable between a disengaged stable position and an engaged stable position, and vice versa, said engaged stable position corresponding to a position in which the contact part (16) bears against the control member (2) in such a manner as to establish a determined friction force,
   - electromechanical drive means for moving the contact part between the two stable positions,
   - and a remote control means (14) for activating and deactivating the drive means.

2. Friction device (11) according to claim 1, **characterised in that** it comprises compensation means for automatically taking up the wear of the parts producing the friction.

3. Friction device (11) according to claim 1 or 2, **characterised in that** it comprises limiting means for automatically limiting the friction force to a determined maximum friction threshold.

4. Friction device (11) according to any one of claims 1 to 3, **characterised in that** it comprises means for adjusting the level of the friction force.

5. Friction device (11) according to any one of claims 1 to 4,
**characterised in that** the drive means comprise an electric motor (19) rotationally driving a threaded shaft (20) on which is mounted a nut (21) secured to the contact part (16), said nut (21) being rotationally blocked by a stationary stop finger (22), one end of which is engaged transversely in said nut (21) so as to impose a translational movement on said nut (21) in a guide jacket (23) under the effect of the rotation of the threaded shaft (20).

6. Friction device (11) according to claims 5 and 2, **characterised in that** the compensation means comprise on one side a fitting support (27) slidably mounted and rotationally blocked on an end portion of the nut (21) having a diameter smaller than the diameter of the complementary portion of said nut (21) and on the other side a spring (28) mounted on the end portion of the nut (21) between the fitting support (27) and a shoulder (21a) formed by the complementary portion, said spring (28) being compressed when the friction is established.

7. Friction device (11) according to claims 5 and 3 or 6 and 3,
**characterised in that** the limiting means comprise an oblong slot (30) formed in the nut (21) and in which is engaged the end of the stop finger (22), thus limiting the translational stroke of the nut (21) to a distance corresponding to the longitudinal dimension of the oblong slot (30) and consequently limiting the compression of the spring (28).

8. Friction device (11) according to any one of claims 1 to 7,
**characterised in that** the contact part (16) comprises a female fitting (17) of hemispherical shape intended to come to bear against a male fitting (18) of complementary hemispherical shape fastened on the control member (2), in order to establish the friction.

9. Friction device (11) according to any one of claims 1 to 8,
**characterised in that** the control member (2) is a cyclic stick of a rotorcraft of the helicopter type.

10. Flight control system for an aircraft comprising at least one movable aircraft attitude member, comprising:

- at least one manual control member (2,8) acting on at least two control axes of the aircraft,
- and at least one mechanical control linkage (Cr,Ct,Cc,Cl) for each control axis, each mechanical control linkage (Cr,Ct,Cc,Cl) connecting a control member (2,8) to at least one movable attitude member of the aircraft,

**characterised in that** it comprises a friction device (11) in accordance with any one of claims 1 to 9 in at least one mechanical control linkage (Cr,Ct,Cc,Cl).

11. Flight control system according to claim 10,
**characterised in that** the manual control member (2) is a cyclic stick and **in that** the movable attitude member is a swashplate (3) controlled by servo-controls (4,5,6), the control axes thus comprising the roll control axis (R) and the pitch control axis (T) of the aircraft.

12. Flight control system according to claim 11,
**characterised in that** it comprises two cyclic sticks connected together by a pitch torque tube (9) on which they are articulated, the friction device (11) constituting an extension of one side of said pitch torque tube (9) mounted rotatably on a longeron (12) of the aircraft structure and the centre of the male hemispherical fitting (18) coinciding with the point of intersection of the axis of said pitch torque tube (9) and the roll axis of rotation of the cyclic stick situated on the same side as said extension.

13. Flight control system according to any one of claims 10 to 12,
**characterised in that** it comprises pedals as a control member for acting for example on an anti-torque rotor, one of the control axes thus representing a yaw control axis (L) of the aircraft.

14. Flight control system according to any one of claims 10 to 13,
**characterised in that** it comprises a collective stick (8) as a control member for acting on the collective pitch of a main rotor, one of the control axes thus representing a collective pitch control axis of the aircraft.

15. Flight control system according to any one of claims 10 to 14,
**characterised in that** it comprises means for adjusting the level of friction force on at least one mechanical control linkage in order to optimise the piloting comfort parameter in particular of the cyclic control linkages.

16. Flight control system according to any one of claims 10 to 15,

**characterised in that** it comprises means for increasing the stability of the aircraft.

17. Flight control system according to claim 16,
**characterised in that** the means for increasing the stability comprise:

- an actuating means having amplitude-limited authority (13) connected in series on at least one control linkage (Ct,Cr,Cc,Cl) so as to act on a movable attitude member as a function of a flight setpoint,
- a means for determining the amplitude margin of the actuating means having amplitude-limited authority (13),
- an indicator informing the pilot when the amplitude margin is less than a determined value and indicating to the pilot the direction of movement of the manual control member (2,8) in order to restore a sufficient amplitude margin, said indicator thus providing long-term information about attitude or trajectory control,
- and means for restoring the amplitude margin while retaining the positioning of the movable attitude member.

18. Flight control system according to any one of claims 10 to 17,
**characterised in that** the remote control means is a switch installed on a handle (15) of the control member (2,8).

19. Flight control system according to claim 15,
**characterised in that** the means for adjusting the level of friction force are associated with a remote adjustment member provided on the control member (2,8).

20. Simplified autopilot system for an aircraft comprising at least one computer and software means for implementing management functions of a flight control system,
**characterised in that** it comprises:

- at least one manual control member (2,8) suitable for acting on at least one control axis of the aircraft,
- at least one mechanical control linkage (Ct,Cr,Cc,Cl) for each control axis, said linkage connecting the control member to at least one movable aircraft attitude member of the aircraft,
- an actuating means with amplitude-limited authority (13) connected in series on at least one control linkage, so as to control the position of the movable attitude member as a function of a flight setpoint and to act if necessary on the movable attitude member to modify its position,
- a means for determining the amplitude margin of the actuating means having amplitude-limited authority (13),
- an indicator informing the pilot when the amplitude margin is less than a determined value and indicating to the pilot the direction of movement of the manual control member in order to restore a sufficient amplitude margin, said indicator thus providing long-term information about attitude or trajectory control,
- means for restoring the sufficient amplitude margin while retaining the positioning of the movable attitude member,
- and a friction device (11) in accordance with any one of claims 1 to 9.

21. Simplified autopilot system according to claim 20, **characterised in that** the manual control member (2) is a cyclic stick, the control axes thus comprising the roll control axis (R) and the pitch control axis (T).

22. Simplified autopilot system according to claim 20 or 21,
**characterised in that** it comprises a loop for monitoring manual piloting activity and means for automatically disengaging the friction device (11) in order to disengage said friction device (11) when a determined manual piloting activity threshold is reached.

23. Aircraft of the rotorcraft or helicopter type comprising a flight control system in accordance with any one of claims 10 to 19.

24. Aircraft of the rotorcraft or helicopter type comprising a simplified autopilot system in accordance with any one of claims 20 to 22.

Fig.1

Fig.2

EP 2 384 969 B1

Fig.3

Fig.4

17

Fig.5

EP 2 384 969 B1

**RÉFÉRENCES CITÉES DANS LA DESCRIPTION**

**Documents brevets cités dans la description**

- FR 764635
- FR 2678577
- FR 2295473